# EUROPÄISCHE PATENTSCHRIFT

(11) **EP 2 385 287 B1**
(45) Veröffentlichungstag und Bekanntmachung des Hinweises auf die Patenterteilung: **12.11.2014**
(21) Anmeldenummer: 11164688.1
(22) Anmeldetag: 03.05.2011
(51) Int. Cl.: F16L 21/00, F16L 25/00, F16L 25/14, F16L 49/02

(54) **Adapter-Zwischenfutter, und damit hergestellte Rohrverbindung**
Adapter interlining and tube connection comprising same
Tampon intermédiaire d'adaptateur et raccord tubulaire ainsi fabriqué

(30) Priorität: 04.05.2010 DE 202010005368 U
(43) Veröffentlichungstag der Anmeldung: 09.11.2011
(73) Patentinhaber: Funke Kunststoffe GmbH, 59071 Hamm-Uentrop (DE)
(72) Erfinder: Funke, Norbert, 48324, Sendenhorst (DE); Funke, Hans Günter, 48324, Sendenhorst (DE)
(74) Vertreter: Habbel, Ludwig

(56) Entgegenhaltungen:
- EP-A1- 2 072 877
- DE-A1- 2 116 137
- DE-A1- 4 219 528
- DE-A1-102010 000 251
- DE-B- 1 084 986
- DE-B- 1 244 498
- US-A- 4 480 860

## Beschreibung

Die Erfindung betrifft ein Adapter-Zwischenfutter einer Rohrmanschette, die zur axialen Rohrverbindung dient. Weiterhin betrifft die Erfindung die damit hergestellte Rohrverbindung.

In der Praxis tritt häufig die Situation auf, dass bei der Instandsetzung von beispielsweise unterirdisch verlegten Rohrleitungen bestimmte Abschnitte der Rohrleitung ausgewechselt werden, während andere Abschnitte des Rohrleitungssystems nach wie vor an Ort und Stelle verbleiben. Die beiden aneinander grenzenden Rohre werden nachfolgend auch als Rohrleitungsabschnitte bezeichnet, das sie, nachdem sie mittels der Rohrmanschette verbunden sind, zwei unterschiedliche Abschnitte derselben Rohrleitung darstellen.

Durch die verwendeten Rohrmanschetten, die auch als Axialmanschetten bezeichnet werden, ist es möglich, die beiden zu verbindenden Enden der beiden Rohrabschnitte axial voreinander anzuordnen und mithilfe der Rohrmanschette einen dichten Anschluss zwischen diesen beiden Rohrleitungsabschnitten sicherzustellen. Durch zirkumferent gleichmäßig wirkende Spannkräfte der Rohrmanschette werden üblicherweise die beiden Rohrleitungsabschnitte axial fluchtend zueinander ausgerichtet, so dass bei gleichen Nenndurchmessern der beiden Rohrleitungsabschnitte ein nahezu ungestörter freier Rohrleitungsabschnitt sichergestellt ist.

Aus der DE 12 44 498 B ist eine Rohrverbindung von Betonmuffenrohren bekannt. Die beiden zu einer Rohrleitung zu verbindenden Muffenrohre besitzen an ihrer Außenseite eine Abflachung und zugleich Wandstärkenverdickung, den sogenannten Fuß.

Aus der DE 10 84 986 B ist eine Dichtungsmanschette aus Betonfertigteilen für Betonrohre bekannt. Die Dichtungsmanschette besteht aus einer Grundplatte, zwei Seitenstücken und einem Klammerstück, die jeweils mit einer durchlaufenden Vergußfuge versehen sind, in die ein bituminöses Vergußmaterial eingefüllt wird. Das eingefüllte Vergußmaterial weist eine im wesentlichen omega-förmige Innenfläche und eine im wesentlichen omega-förmige äußere Mantelfäche auf.

Die DE 10 2010 000251 A1 offenbart in den Figuren 23-25 eine Dichtung mit einer äußeren kreisrunden Mantelfläche und einer omega-förmigen Innenfläche. Dieses Dokument ist allerdings nachveröffentlicht.

Problematisch ist jedoch, wenn die Rohrleitungsabschnitte unterschiedliche Außenkonturen aufweisen. Beispielsweise sind Betonrohre bekannt, die als "Rohr mit Fuß" oder "Fu ßrohr" bezeichnet werden, und die keine kreisrunde, sondern eine etwa omega-förmige Außenkontur aufweisen, also einen abgeflachten äußeren Umfangsbereich, der beispielsweise nach unten weisend ausgerichtet wird und mit dem sie dann lagestabil auf den Untergrund aufgestellt werden können. Die Rohrmanschette ist idealerweise zur Verbindung von zwei Rohren mit kreisrunder Umfangskontur und möglichst gleichem Außendurchmesser vorgesehen, kann sich jedoch auch unterschiedlichen Außendurchmessern von Rohren anpassen. Wennn jedoch ein Rohr eine kreisrunde Umfangskontur aufweist, und das angrenzende Rohr als Fußrohr ausgestaltet ist, kann sich die Rohrmanschette derartigen unregelmäßigen Rohrumfängen möglicherweise nicht gut genug anpassen. Daher kann in derartigen Fällen entweder eine undichte Rohrverbindung resultieren, oder es kann sich ein Versatz bzw. eine entsprechende Stoßkante zwischen den beiden aneinander grenzenden Rohrleitungsabschnitten ergeben. Je nach Fließrichtung innerhalb der Rohrleitung kann ein solcher Versatz eine störende Stufe darstellen, an der Verschmutzungen sedimentieren oder größere Partikel hängenbleiben können, so dass eine Verstopfung der Rohrleitung durch diese Kante gefördert werden kann.

Der Erfindung liegt die Aufgabe zugrunde, eine Rohrmanschette zur axialen Rohrverbindung dahingehend weiterzuentwickeln und eine damit herstellbare Rohrverbindung anzugeben, dass ein Rohrleitungsabschnitt mit kreisrunder Außenkontur und ein Fußrohr axial und dicht miteinander verbindbar sind.

Diese Aufgabe wird durch ein Adapter-Zwischenfutter mit den Merkmalen des Anspruchs 1 gelöst sowie durch eine Rohrverbindung nach Anspruch 12.

Die Erfindung schlägt mit anderen Worten vor, die Rohrmanschette dem Rohr mit der vom Kreisrund abweichenden Umfangskontur nicht unmittelbar, sondern unter Zwischenschaltung des vorschlagsgemäßen Adapter-Zwischenfutters anzulegen. Da das Zwischenfutter über seinen gesamten Umfang gesehen unterschiedliche Wandstärken aufweist, innen die Abflachung aufweist, welche dem Fußbereich eines Fußrohrs entspricht, und außen eine kreisrunde Umfangskontur aufweist, wird das in dem Zwischenfutter angeordnete Rohr innerhalb der Rohrmanschette problemlos gehalten, wobei die Rohrmanschette auf die kreisrunde Außenkontur des Zwischenfutters einwirken kann.

In Anpassung an ein kreisrundes Rohr mit einem bestimmten Innen- bzw. Nenndurchmesser, mit dem das Fußrohr verbunden werden soll, kann das Zwischenfutter derart ausgestaltet sein, dass es das Fußrohr dergestalt zu dem kreisrunden Rohr positioniert, dass die beiden kreisrunden, lichten Innenquerschnitte beider Rohrabschnitte möglichst koaxial zueinander ausgerichtet sind. Auf diese Weise kann bei gleichen Innendurchmessern eine Staukante im Übergangsbereich dieser beiden Rohrleitungsabschnitte vermieden werden. Oder es kann zumindest vorgesehen sein, dass bei entsprechender Ausgestaltung des Zwischenfutters die Sohlen der beiden aneinander grenzenden Rohrleitungsabschnitte, also die tiefsten Stellen der inneren Rohroberflächen, einen möglichst geringen Höhenversatz aufweisen, so dass eine Staukante nicht in einem störenden Ausmaß entsteht.

Wenn die zu verbindenden Rohrleitungsabschnitte unterschiedliche Nenndurchmesser aufweisen, kann vorteilhaft vorgesehen sein, dass die Mittelpunkte der Außen- und Innendurchmesser des Zwischenfutters in der Weise versetzt zueinander vorgesehen sind, dass wie oben beschrieben die Sohlen der beiden aneinander grenzenden Rohrleitungsabschnitte gar keinen oder einen möglichst geringen Höhenversatz aufweisen, so dass eine Staukante vermieden wird oder zumindest nicht in einem störenden Ausmaß entsteht.

Vorteilhaft kann die Innenfläche des Zwischenfutters wenigstens eine um den inneren Umfang verlaufende Rippe aufweisen, so dass im Vergleich zu einer gleichmäßigen Ausgestaltung der inneren Oberfläche des Zwischenfutters im Bereich dieser Rippe ein verstärkter Anpressdruck bewirkt wird und somit eine zuverlässige Dichtigkeit zwischen dem Zwischenfutter und der davon umfassten Rohrleitung gewährleistet wird. Insbesondere aufgrund der vom Kreisrund abweichenden Außenkontur des Fußrohres ergeben sich über den Umfang verteilt ungleichmäßig starke Anpresskräfte, mit denen die Rohrmanschette auf die Rohrwand einwirkt. Die Rippe an der Innenseite des Zwischenfutters stellt eine am gesamten Umfang ausreichend dichte Anlage des Zwischenfutters an der äußeren Oberfläche des Fußrohrs sicher, und sichert damit eine dichte Ausgestaltung der gesamten Rohrverbindung.

Insbesondere können vorteilhaft mehrere derartige Rippen voneinander beabstandet über die axiale Länge des Zwischenfutters vorgesehen sein, um auf diese Weise die Dichtungswirkung noch zuverlässiger gewährleisten zu können.

Vorteilhaft kann dem abgeflachten Umfangsbereich gegenüberliegend das Zwischenfutter stirnseitig eine tastbare Markierung aufweisen. Die tastbare Markierung ermöglicht es, das Zwischenfutter entweder von Hand oder mittels eines entsprechenden Handhabungsgerätes korrekt derart auszurichten, dass die Markierung auf der Oberseite des vom Zwischenfutter umfassten Fußrohres und dementsprechend der abgeflachte Bereich der Innenkontur dort vorgesehen ist, wo das Fußrohr seinen Fußbereich aufweist, so dass auf diese Weise die korrekte Ausrichtung des Zwischenfutters auch von oben problemlos überwacht werden kann, selbst wenn der Fußbereich des Fußrohrs nicht problemlos einsehbar ist. Dadurch, dass die Markierung nicht auf der äußeren Umfangsfläche des Zwischenfutters vorgesehen ist, sondern an dessen Stirnseite, wird eine möglichst gleichmäßige Anlage der Rohrmanschette am Zwischenfutter nicht beeinträchtigt.

Vorteilhaft kann das Zwischenfutter aus einem Elastomerwerkstoff bestehen. Dieser ermöglicht einerseits die Übertragung von ausreichend hohen Druckkräften, um eine zuverlässig dichte Anpressung des Zwischenfutters an das Fußrohr zu gewährleisten, und ermöglicht andererseits eine ausreichend gute Verformbarkeit, um sich optimal an die Rohroberfläche anlegen zu lassen und die gewünschte Dichtigkeit herzustellen. Zudem ist die Verformbarkeit des aus einem Elastomerwerkstoff bestehenden Zwischenfutters vorteilhaft, um ein problemloses Aufziehen des Zwischenfutters auf ein Rohrende zu unterstützen. Dabei kann das Zwischenfutter beispielsweise mit einer Shore A-Härte von 55 bis 75 Einheiten ausgestaltet sein.

Eine zuverlässige Montage des Zwischenfutters auf dem Ende des Fußrohrs kann vorteilhaft durch einen Anschlag unterstützt werden, der über die Innenfläche des Zwischenfutters hinaus radial nach innen ragt. Auf diese Weise kann das Zwischenfutter problemlos auf das Rohrende aufgeschoben werden, bis erkennbar das Rohrende an diesen Anschlag des Zwischenfutters stößt. Auf diese Weise ist einerseits die korrekte Ausrichtung des Zwischenfutters auf dem Rohrende sichergestellt, so dass beispielsweise ein Schrägsitz vermieden werden kann, und andererseits ist auf diese Weise sichergestellt, dass das Zwischenfutter ausreichend weit auf das Fußrohr aufgeschoben ist.

Auf einfache Weise kann der Anschlag als zirkumferent umlaufender Ring ausgestaltet sein, so dass bei einfacher Herstellung des Zwischenfutters und angesichts des elastischen Werkstoffs ein ausreichend starker Anschlag verwirklicht werden kann, der nicht versehentlich überwunden wird und zu einem ungewollten, zu weiten Aufschieben des Zwischenfutters auf das Rohrende führen könnte.

Vorteilhaft kann das Zwischenfutter eine eventuell sich einstellende, ungewollte Lageabweichung, wie z. B. eine Winkelabweichung, eine Stauchung oder Dehnung oder auch einen Höhenversatz ("Sprung in der Sohle") zwischen den beiden Rohrleitungsabschnitten ausgleichen: Hierzu kann eine so genannte Flexibilitätszone vorgesehen sein, die dadurch gekennzeichnet ist, dass das Zwischenfutter eine Wandstärke aufweist, die geringer ist als die maximale Wandstärke, die das Zwischenfutter ansonsten aufweist. Es wird also ein ringförmig umlaufender Bereich mit vergleichsweise geringer Wandstärke geschaffen, der eine leichte Verformbarkeit des Zwischenfutters ermöglicht. Sollte nach Herstellung der Rohrverbindung aufgrund von Setzungen im Boden eine der beiden Rohrleitungsabschnitte geringfügig absinken und sich dadurch ein Winkelversatz zwischen den beiden Rohrleitungsabschnitten ergeben, so ermöglicht die Flexibilitätszone eine gewisse Nachgiebigkeit, so dass sich das entsprechend abgesenkte Rohr geringfügig schräg ausrichten kann und schräg an das andere Rohr anschließen kann, so dass das abgesenkte Rohr nicht auf Knickung beansprucht und ggf. beschädigt wird.

Vorteilhaft kann die Flexibilitätszone an einem der beiden stirnseitigen Enden des Zwischenfutters vorgesehen sein, so dass das Zwischenfutter derart montiert werden kann, dass die Flexibilitätszone am freien Ende des Fußrohrs vorgesehen ist, wo dieses mit dem Zwischenfutter versehene Fußrohr an den jeweils anderen Rohrleitungsabschnitt anschließt.

Ein Ausführungsbeispiel eines Adapter-Zwischenfutters und einer unter dessen Verwendung hergestellten Rohrverbindung wird nachfolgend anhand der rein schematischen Darstellungen näher erläutert. Dabei zeigt
- Fig. 1: eine stirnseitige Draufsicht auf das Adapter-Zwischenfutter, und
- Fig. 2: ausschnittsweise einen Längsschnitt in axialer Richtung durch eine Rohrverbindung.

In den Zeichnungen ist mit 1 ein Zwischenfutter bezeichnet, welches als Ring aus einem elastomeren Werkstoff ausgestaltet ist.

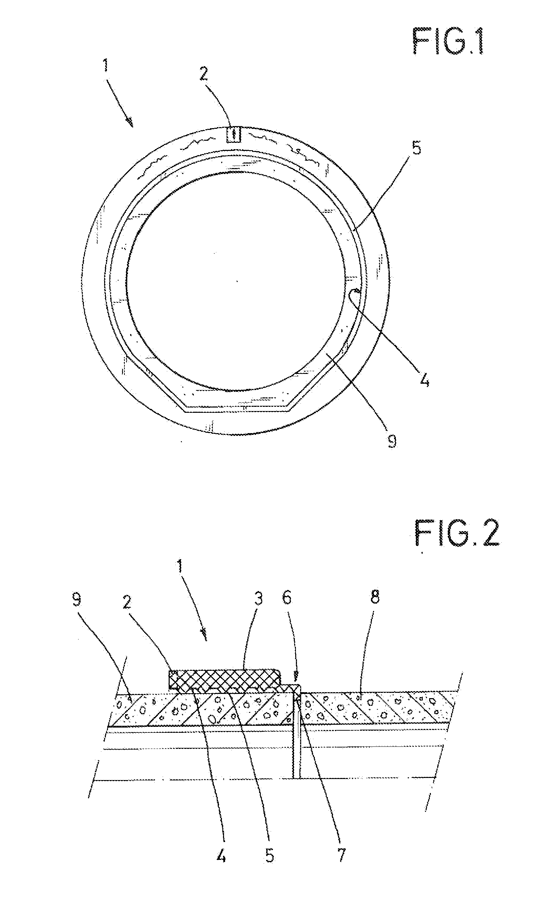

Fig. 1 zeigt das Zwischenfutter in stirnseitiger Draufsicht und, hinsichtlich seiner bevorzugten Einbaulage, korrekt ausgerichtet. Die dementsprechend oberste Stelle des Zwischenfutters 1 ist durch eine tastbare Markierung 2 gekennzeichnet, die an der Stirnseite des Zwischenfutters 1 vorgesehen ist. Zusätzlich ist beiderseits neben der Markierung 2 eine mehrsprachige Beschriftung vorgesehen, welche die korrekte Ausrichtung des Zwischenfutters 1 unterstützt und einen auf der Markierung 2 angebrachten, nach oben weisenden Pfeil erläutert. Die Beschriftungen und der Pfeil sind als erhöhte bzw. vertiefte Flächen in der Oberfläche des Zwischenfutters 1 ausgestaltet, so dass auch dann, wenn nicht die gesamte Markierung vorspringend ausgestaltet wäre, eine eindeutige und tastbare, ggf. maschinell erkennbare, Markierung für den obersten Punkt des Zwischenfutters 1 gegeben ist.

Die etwa omega-förmige Innenkontur des Zwischenfutters 1 entspricht der Außenkontur eines Fußrohrs 9, welches seinerseits eine kreisförmige Innenkontur aufweist.

In einer von dem in Fig. 1 dargestellten Ausführungsbeispiel abweichenden Ausgestaltung des Zwischenfutters 1 kann vorgesehen sein, dass dessen etwa omega-förmige Innenkontur so innerhalb der Außenkontur des Zwischenfutters 1 angeordnet ist, dass die beiden kreisförmigen Konturen, nämlich die kreisförmige Innenkontur des Fußrohrs 9 und die kreisförmige Außenkontur des Zwischenfutters 1, konzentrisch angeordnet sind, so dass beispielsweise ein möglichst stufenloser Übergang von dem Fußrohr 9 zu einem kreisrunden Rohr mit gleichem Nenndurchmesser mittels einer Axialmanschette ermöglicht wird, die zur Verbindung von Rohren mit unterschiedlichen Außendurchmessern vorgesehen ist.

Aus Fig. 2 ist ersichtlich, dass das Zwischenfutter 1 eine äußere, glatte Mantelfläche 3 aufweist, sowie eine Innenfläche 4, die mit einer Mehrzahl von Rippen 5 versehen ist.

Auch abgesehen von der Anordnung der Rippen 5 weist das Zwischenfutter 1 nicht über seine ganze axiale Länge eine gleich große Wandstärke auf: Am in Fig. 2 rechts dargestellten Ende des Zwischenfutters 1 ist zirkumferent umlaufend eine vergleichsweise geringe Wandstärke vorgesehen, so dass das Zwischenfutter 1 in diesem als Flexibilitätszone 6 bezeichneten Bereich mit vergleichsweise geringem Kraftaufwand verformbar ist und entsprechend nachgiebig ist.

An diesem stirnseitigen Ende des Zwischenfutters 1, an dem auch die Flexibilitätszone 6 vorgesehen ist, bildet das Zwischenfutter 1 einen zirkumferent umlaufenden Anschlag 7 aus, der sich über die Innenfläche 4 hinaus radial nach innen erstreckt und somit eine Anschlagkante darstellt, die den Vorschub des Zwischenfutters 1 auf dem Fußrohr 9 begrenzt, wenn das Zwischenfutter 1 auf das Ende des Fußrohrs 9 aufgeschoben wird.

Die Einbausituation des Zwischenfutters 1 in einer Rohrverbindung ist aus Fig. 2 ersichtlich: Ein kreisrundes Rohr 8 ist rechts dargestellt, und das links dargestelltes Fußrohr 9 schließt axial an das Rohr 8 an. Die eigentliche Verbindung, also der mechanische Zusammenhalt der bedien Rohre 8 und 9, wird mittels einer in der Zeichnung nicht dargestellten, auch als Axialmanschette bezeichneten Rohrmanschette hergestellt.

## Patentansprüche

1. Adapter-Zwischenfutter (1) für eine Rohrmanschette zur Herstellung einer axialen Rohrverbindung, mit zwei axialen Enden,
einer äußeren, im wesentlichen kreisrunden Mantelfläche (3), die einen Außendurchmesser des Zwischenfutters (1) definiert,
und einer im wesentlichen omega-förmigen Innenfläche (4), die einen abgeflachten unteren Umfangsbereich aufweist.

2. Adapter-Zwischenfutter nach Anspruch 1,
**dadurch gekennzeichnet,**
**dass** die Mittelpunkte der Außen- und Innendurchmesser versetzt zueinander vorgesehen sind, derart, dass sich die Wandstärke des Zwischenfutters (1), ausgehend von einem Minimum, über ein Maximum wieder zu dem Minimum ändert.

3. Adapter-Zwischenfutter nach Anspruch 1,
**dadurch gekennzeichnet,**
**dass** die Innenfläche (4) wenigstens eine zirkumferent umlaufende Rippe (5) aufweist.

4. Adapter-Zwischenfutter nach Anspruch 3,
**dadurch gekennzeichnet,**
**dass** über die axiale Länge der Innenfläche (4) gesehen die Innenfläche (4) mehrere hintereinander angeordnete und voneinander beabstandete Rippen (5) aufweist.

5. Adapter-Zwischenfutter nach einem der vorhergehenden Ansprüche,
**dadurch gekennzeichnet,**
**dass** dem abgeflachten Umfangsbereich gegenüberliegend das Zwischenfutter (1) stirnseitig eine tastbare Markierung (2) aufweist.

6. Adapter-Zwischenfutter nach einem der vorhergehenden Ansprüche,
**dadurch gekennzeichnet,**
**dass** das Zwischenfutter (1) aus einem Elastomerwerkstoff besteht.

7. Adapter-Zwischenfutter nach Anspruch 6,
**dadurch gekennzeichnet,**
**dass** das Zwischenfutter (1) aus einem Werkstoff mit einer Shore-A-Härte zwischen 55 bis 75 besteht.

8. Adapter-Zwischenfutter nach einem der vorhergehenden Ansprüche,
**gekennzeichnet durch**
einen über die Innenfläche (4) hinaus radial nach innen ragenden Anschlag (7) an seinem einen axialen Ende.

9. Adapter-Zwischenfutter nach Anspruch 8,
**dadurch gekennzeichnet,**
**dass** der Anschlag (7) als zirkumferent umlaufender Ring ausgestaltet ist.

10. Adapter-Zwischenfutter nach einem der vorhergehenden Ansprüche,
**gekennzeichnet durch**
eine zirkumferent umlaufende Flexibilitätszone (6), innerhalb welcher das Zwischenfutter (1) eine Wandstärke aufweist, die geringer ist als die maximale Wandstärke.

11. Adapter-Zwischenfutter nach Anspruch 10,
**dadurch gekennzeichnet,**
**dass** die Flexibilitätszone (6) an einem der beiden stirnseitigen Enden des Zwischenfutters (1) vorgesehen ist.

12. Rohrverbindung,
mit zwei axial aneinander grenzenden Rohren (8, 9), wobei die beiden Rohre (8, 9) unterschiedliche Querschnittskonturen aufweisen,
und mit einer Axialmanschette,
und mit einem Adapter-Zwischenfutter (1) nach einem der vorhergehenden Ansprüche,
wobei das Zwischenfutter (1) auf dem Rohr (9) angeordnet ist, welches einen so genannten Fuß in Form einer Abflachung an seinem äußeren Umfang aufweist, und wobei die Innenfläche (4) des Zwischenfutters (1) mit ihrem abgeflachten unteren Umfangsbereich der äußeren Umfangs-Abflachung dieses Rohres (9) anliegt.

## Claims

1. Adapter intermediate liner (1) for a pipe collar for making an axial connecting between pipes, with two axial ends, an outer substantially circular casing surface (3) which defines an outer diameter of the intermediate liner (1) and a substantially omega-shaped inner surface (4) which has a flattened lower circumferential area.

2. Adapter intermediate liner in accordance with claim 1 **characterised in that** the centre points of the outer and inner diameters are offset with reference to one another in such a way that the wall thickness of the intermediate liner (1) varies starting from a minimum, rising to a maximum and then returning to the minimum.

3. Adapter intermediate liner in accordance with claim 1 **characterised in that** the inner surface (4) has at least one rib (5) running around the circumference.

4. Adapter intermediate liner in accordance with claim 3 **characterised in that** the inner surface (4), viewed over the axial length of the inner surface (4), has several ribs (5) arranged behind one another at a distance from one another.

5. Adapter intermediate liner in accordance with any of the aforementioned claims **characterised in that** the intermediate liner (1) has a tangible marking (2) on its front side opposite the flattened circumferential area.

6. Adapter intermediate liner in accordance with any of the aforementioned claims **characterised in that** the intermediate liner (1) consists of an elastomer material.

7. Adapter intermediate liner in accordance with claim 6 **characterised in that** the intermediate liner (1) consists of a material with a Shore-A hardness of between 55 and 75.

8. Adapter intermediate liner in accordance with any of the aforementioned claims **characterised by** a stop (7) at one of its axial ends which projects radially inwards beyond the inner surface (4).

9. Adapter intermediate liner in accordance with claim 8 **characterised in that** the stop (7) is formed as a ring running around the circumference.

10. Adapter intermediate liner in accordance with any of the aforementioned claims **characterised by** a circumferential flexibility zone (6) within which the intermediate liner (1) has a wall thickness which is less than the maximum wall thickness.

11. Adapter intermediate liner in accordance with claim 10 **characterised in that** the flexibility zone (6) is provided on one of the two front ends of the intermediate liner (1).

12. Pipe connection with two pipes (8, 9) adjoining one another axially, where the two pipes (8, 9) have different cross-section contours, and with an axial collar and with an adapter intermediate liner (1) in accordance with any of the aforementioned claims, where the intermediate liner (1) is arranged on the pipe (9) which has a so-called foot in the shape of a flattened area on its outer circumference and where the flattened lower circumferential area of the inner surface (4) of the intermediate liner (1) lies against the outer flattened circumferential area of this pipe (9).

## Revendications

1. Mandrin intercalaire adaptateur (1) pour une manchette tubulaire servant à la fabrication d'une jonction tubulaire axiale, comprenant deux extrémités axiales, une surface enveloppante (3) externe essentiellement circulaire qui définit un diamètre externe du mandrin intercalaire (1), et une surface intérieure (4) essentiellement en forme d'oméga présentant une zone circonférentielle inférieure aplatie.

2. Mandrin intercalaire adaptateur selon la revendication 1, **caractérisé en ce que** les points médians des diamètres externes et internes sont prévus décalés l'un par rapport à l'autre de sorte que l'épaisseur de paroi du mandrin intercalaire (1) part d'un minimum puis transite par un maximum pour revenir ensuite à un minimum.

3. Mandrin intercalaire adaptateur selon la revendication 1, **caractérisé en ce que** la surface intérieure (4) présente au moins une nervure (5) présentant un tracé circonférentiel.

4. Mandrin intercalaire adaptateur selon la revendication 3, **caractérisé en ce que** considérée sur la longueur axiale de la surface intérieure (4), cette même surface intérieure (4) comporte plusieurs nervures (5) agencées les unes derrière les autres à une certaine distance les unes des autres.

5. Mandrin intercalaire adaptateur selon l'une des revendications précédentes, **caractérisé en ce qu'**en face de la partie aplatie de la circonférence, le mandrin intercalaire (1) présente sur le côté frontal un marquage (2) palpable.

6. Mandrin intercalaire adaptateur selon l'une des revendications précédentes, **caractérisé en ce que** ledit mandrin intercalaire (1) se compose d'un matériau élastomère.

7. Mandrin intercalaire adaptateur selon la revendication 6, **caractérisé en ce que** le mandrin intercalaire (1) se compose d'un matériau présentant une dureté Shore A comprise entre 55 et 75.

8. Mandrin intercalaire adaptateur selon l'une des revendications précédentes, **caractérisé par** une butée (7) faisant saillie radialement, au-delà de la surface intérieure (4), vers l'intérieur par son extrémité axiale.

9. Mandrin intercalaire adaptateur selon la revendication 8, **caractérisé en ce que** la butée (7) est configurée sous forme de bague au tracé circonférentiel.

10. Mandrin intercalaire adaptateur selon l'une des revendications précédentes, **caractérisé par** une zone de flexibilité (6) d'un tracé circonférentiel à l'intérieur de laquelle le mandrin intercalaire (1) présente une épaisseur de paroi inférieure à l'épaisseur maximale de paroi.

11. Mandrin intercalaire adaptateur selon la revendication 10, **caractérisé en ce que** la zone de flexibilité (6) est prévue au niveau de l'une des deux extrémités frontales du mandrin intercalaire (1).

12. Jonction tubulaire comprenant deux tubes (8, 9) en juxtaposition axiale réciproque, sachant que les deux tubes (8, 9) présentent des contours de section différents, et comprenant une manchette axiale ainsi qu'un mandrin intercalaire adaptateur (1) selon l'une des revendications précédentes, sachant que le mandrin intercalaire (1) est agencé sur le tube (9) comportant un pied ainsi nommé se présentant sous forme d'aplatissement sur son développement externe, et sachant que la surface intérieure (4) du mandrin intercalaire (1) applique par la zone inférieure aplatie de son développement contre la surface externe aplatie du développement de ce tube (9).
